# EUROPÄISCHE PATENTSCHRIFT

(11) **EP 2 522 819 B1**
(45) Veröffentlichungstag und Bekanntmachung des Hinweises auf die Patenterteilung: **29.12.2021**
(21) Anmeldenummer: 12165487.5
(22) Anmeldetag: 25.04.2012
(51) Int. Cl.: F01D 25/16, F02C 7/06, F04D 29/048, F01D 5/06

(54) **Befestigung einer Axiallagerscheibe in einer magnetgelagerten Turbomaschine mittels einer Schrumpfscheibenverbindung**
Fixing of a bearing axial disc in a turbo engine with magnetic bearings by means of a shrink disc connection
Fixation d'un disque de palier axial dans une turbomachine à palier magnétique au moyen d'une frette de serrage

(30) Priorität: 10.05.2011 DE 102011075583
(43) Veröffentlichungstag der Anmeldung: 14.11.2012
(73) Patentinhaber: Siemens Energy Global GmbH & Co. KG, 81739 München (DE)
(72) Erfinder: Kühn, Helmut, 02894 Mengelsdorf (DE)

(56) Entgegenhaltungen:
- DE-A1- 3 107 746
- DE-A1- 4 118 941
- DE-B1- 2 847 910
- US-A- 5 310 311

## Beschreibung

### Technisches Gebiet

Die vorliegende Erfindung betrifft eine Strömungsmaschine und ein Verfahren zum Erzeugen einer Pressverbindung zwischen einem ersten Ringelement und einer Welle einer Strömungsmaschine. Verschiedene Pressverbindungen sind allgemein bekannt. So zeigt beispielsweise die DE 2847910 B1 eine ähnliche Vorrichtung zur Befestigung einer Nabe mit einem Nabenansatz auf einer Welle. Dabei wird die Spannkraft, die zur Befestigung der Nabe mit einem Nabenansatz auf der Welle notwendig ist, mittels axialen Verschiebens bzw. Verschraubens von zwei Stauchringen, welche ihrerseits auf zwei weiteren Stauchringen gelagert sind, vollzogen.

### Hintergrund der Erfindung

In Strömungsmaschinen, wie beispielsweise in einem Turboverdichter oder in einer Turbine, werden auf einer drehbaren Welle Rotorblätter angeordnet, welche von einem Strömungsmedium angeströmt werden. Die Welle einer Strömungsmaschine wird mit Axial- und Radiallagern in einem Lagergehäuse der Strömungsmaschine drehbar gelagert.

Zur Lagerung der Welle in dem Lagergehäuse werden in herkömmlichen Lagern beispielsweise Gleitlager eingesetzt. Ferner werden Magnetlager eingesetzt, mit welchen eine reibungslose drehbare Lagerung der Welle möglich ist. Aufgrund von Magnetkräften wird die Welle dabei in einer vorbestimmten axialen und/oder radialen Position drehbar gelagert. Magnetlager können als passive Magnetlager ausgebildet werden. Bei passiven Magnetlagern werden beispielsweise diamagnetische Materialien verwendet. Bei aktiven Magnetlagern wird die Lagerkraft durch einstellbare Elektromagneten erzeugt. Die Elektromagneten können gesteuert werden, um eine gewünschte Magnetkraft zu erzeugen, die die Welle in einer vorbestimmten radialen und/oder axialen Position halten.

Bei aktiven Magnetlagern weist die Welle eine Axiallagerscheibe auf, welche zwischen zwei Statorelementen, welche an dem Lagergehäuse befestigt sind, drehbar in einer vorbestimmten Position gehalten wird. Die Axiallagerscheibe wird üblicherweise integral bereits bei Herstellung der Welle ausgebildet. So wird beispielsweise die Axiallagerscheibe mittels Drehens oder Fräsens aus dem Grundkörper der Welle gedreht.

Alternativ hierzu ist es möglich, die Axiallagerscheibe direkt auf die Welle aufzuschrumpfen. Beim Aufschrumpfen wird das Prinzip der Wärmeausdehnung beider Elemente, der Welle und der Axiallagerscheibe, genutzt. Bei Montage der Axiallagerscheibe wird diese beispielsweise erwärmt und in dem erwärmten Zustand auf die Welle aufgeschoben. Nach Abkühlen der Axiallagerscheibe schrumpft diese zusammen, so dass ein Presssitz der Axiallagerscheibe auf der Welle erzeugt wird.

Die Statorelemente eines aktiven Magnetlagers weisen Spulen auf, um die elektromagnetischen Kräfte zu erzeugen. Um den elektromagnetischen Fluss möglichst wenig zu stören, sollen die Statorelemente möglichst keine axialen Teilflächen aufweisen. Die Statorelemente bilden dann jeweils einen geschlossenen Statorring. Zwischen zwei solcher Statorringe befindet sich im montierten Zustand der Welle die Axiallagerscheibe.

Falls einer der Statorringe, beispielsweise aufgrund eines Defekts, demontiert werden muss, ist es zwangsläufig notwendig, die Axiallagerscheibe von der Welle abzuziehen, um den defekten Statorring zu erreichen und auszutauschen. Wird die Axiallagerscheibe einstückig mit der Welle geformt, muss die gesamte Welle ausgebaut werden. Wird die Axiallagerscheibe auf die Welle aufgeschrumpft, kann es genügen die Axiallagerscheibe zu demontieren, wobei es sehr aufwendig ist, den Presssitz der aufgeschrumpften Axiallagerscheibe zu lösen.

### Darstellung der Erfindung

Es ist eine Aufgabe der vorliegenden Erfindung, eine einfache und lösbare Befestigungsmöglichkeit eines mit einer Welle drehbar befestigten Elements für eine Strömungsmaschine bereitzustellen.

Die Aufgabe wird mit einer Strömungsmaschine und mit einem Verfahren zum Erzeugen einer Pressverbindung zwischen einem ersten Ringelement und einer Welle einer Strömungsmaschine gemäß den unabhängigen Ansprüchen gelöst.

Gemäß eines ersten Aspekts der vorliegenden Erfindung wird eine Strömungsmaschine mit den Merkmalen gemäß Anspruch 1 beschrieben.

Gemäß einem weiteren Aspekt der vorliegenden Erfindung wird ein Verfahren zum Erzeugen einer Pressverbindung zwischen einem ersten Ringelement und einer Welle einer Strömungsmaschine mit den Merkmalen gemäß Anspruch 8 beschrieben.

Als Strömungsmaschine wird im Rahmen der vorliegenden Anmeldung eine Fluidenergiemaschine bezeichnet, bei der die Energieübertragung zwischen Fluid und Maschine durch eine Strömung nach den Gesetzen der Fluiddynamik erfolgt. Die Energieübertragung erfolgt an rotierenden Rotorblättern, welche drehfest auf der drehbaren Welle angeordnet sind. Ist die Strömungsmaschine ein Verdichter, so wird die drehbare Welle angetrieben und die Rotorblätter verdichten das an den Rotorblättern durchströmende Fluid. Ist die Strömungsmaschine eine Turbine, so strömt ein energiereiches Fluid gegen die Rotorblätter und treibt diese und somit die drehbare Welle an. Eine Strömungsmaschine kann beispielsweise ein Turboverdichter, eine Gasturbine, eine Dampfturbine, ein Strahltriebwerk oder eine andere Turbine oder ein Verdichter in axialer oder radialer Bauart sein.

Die Welle der Strömungsmaschine ist drehbar bezüglich des Gehäuses, insbesondere eines Lagergehäuses, der Strömungsmaschine gelagert. Die Welle der Strömungsmaschine weist die Drehachse auf. Eine Richtung parallel zu der Drehachse wird als Axialrichtung der Welle definiert. Eine Richtung, welche durch den Mittelpunkt der Welle verläuft und senkrecht zu der Drehachse ausgerichtet ist, wird als Radialrichtung der Welle und der Strömungsmaschine bezeichnet.

Unter dem Begriff "Element" werden im Rahmen dieser Anmeldung Bauteile verstanden, welche drehfest mit der Welle der Strömungsmaschine befestigbar sind. Das Element kann beispielsweise ein Rotorblatt, ein Rotorblattträger, ein Lagerring oder eine Lagerscheibe sein. Das Element weist die Durchgangsöffnung auf, durch welche die Welle hindurchgeschoben werden kann, bis das Element seine vorbestimmte Position auf der Welle in Axialrichtung erreicht.

Das erste Ringelement ist beispielsweise ein Spannring bzw. ein Klemmring. Durch Ausübung einer radialen Spannkraft verkleinert das erste Ringelement seinen inneren Durchmesser, so dass die Pressverbindung zwischen dem Ringelement und der Welle erzeugbar ist. Das Ringelement, als Klemmring ausgeführt, kann zum Verringern seines inneren Durchmessers beispielsweise einen Spalt in Umfangsrichtung aufweisen und somit eine offene ringförmige Profilform mit zwei freien Enden entlang der Umfangsrichtung aufweisen. Ferner kann das erste Ringelement ein geschlossener Ring sein, wobei das erste Ringelement verformbar, zum Beispiel elastisch verformbar, ausgebildet sein kann, um seinen Durchmesser bei Ausübung der radialen Spannkraft zu reduzieren.

Das zweite Ringelement ist mit einem inneren Durchmesser ausgebildet, so dass das zweite Ringelement über das erste Ringelement geschoben werden kann und anliegend auf der äußeren Fläche des ersten Ringelements befestigt werden kann.

Die erste äußere Fläche des ersten Ringelements verläuft zwischen dem ersten Ende und dem axial gegenüberliegenden Ende konisch zu. Dabei wird entlang einer ersten Richtung, welche parallel zu der Drehachse verläuft, ein Oberflächenverlauf beschrieben, welcher entlang der ersten Richtung nicht parallel zu der Drehachse verläuft. An dem ersten axialen Ende des ersten Ringelements weist die erste äußere Fläche beispielsweise einen ersten Abstand zu der Drehachse auf. An dem dem ersten axialen Ende gegenüberliegenden zweiten Ende des ersten Ringelements weist die erste äußere Fläche beispielsweise einen zweiten Abstand zur Drehachse auf. Läuft die erste äußere Fläche entlang der ersten Richtung konisch zu, so ist der erste Abstand der ersten äußeren Fläche zu der Drehachse größer als der zweite Abstand. Mit anderen Worten weist das erste Ringelement ein keilförmiges Profil auf. Anders ausgedrückt weist eine Linie, welche in Axialrichtung entlang der ersten äußeren Fläche verläuft, einen Winkel größer als 0° Grad und kleiner als 90° Grad zu der Drehachse auf.

Entsprechend der ersten äußeren Fläche wird die konisch zulaufende innere Fläche des zweiten Ringelements beschrieben. Die zweite innere Fläche des zweiten Ringelements verläuft komplementär zu der ersten äußeren Fläche konisch zu. Mit anderen Worten weist eine Linie, welche entlang der zweiten inneren Fläche von einem axialen Ende zu einem gegenüberliegenden axialen Ende des zweiten Ringelements verläuft, denselben Winkel zur Drehachse auf wie die Linie, welche auf der ersten äußeren Fläche von einem axialen ersten Ende des ersten Ringelements entlang der ersten Richtung zu dem gegenüberliegenden zweiten Ende des ersten Ringelements verläuft.

Das erste Ringelement und das zweite Ringelement bilden eine Schrumpfscheibenverbindung aus. Wird das zweite äußere Ringelement auf das erste innere Ringelement entgegen der ersten Richtung aufgeschoben, so verspannen sich das erste Ringelement und das zweite Ringelement aufgrund ihrer komplementär zueinander konisch ausgebildeten Berührflächen (erste äußere Fläche und zweite innere Fläche). Das zweite Ringelement kann allgemein entlang einer axialen Richtung auf das erste Ringelement aufgeschoben werden. Durch die aufgebrachte axiale Spannkraft wird über die konisch zulaufenden Berührflächen des ersten Ringelements und des zweiten Ringelements eine radiale Spannkraft erzeugt. Diese radiale Spannkraft verursacht eine Verkleinerung des inneren Durchmessers des ersten Ringelements. Dadurch wird die Pressverbindung zwischen dem ersten Ringelement und der Welle erzeugt.

Zum Lösen der Pressverbindung wird die axiale Spannkraft reduziert und das zweite Ringelement von dem ersten Ringelement getrennt. Aufgrund der konisch komplementär ausgebildeten Berührflächen des ersten Ringelements und des zweiten Ringelements ist ein leichtes Lösen des ersten Ringelements und des zweiten Ringelements möglich. Die Pressverbindung mittels des ersten Ringelements und des zweiten Ringelements kann wiederholbar ausgeführt werden.

Das Element kann beispielsweise an einem axialen Ende des ersten Ringelements anliegen und somit fixiert werden, so dass bei Bestehen der Pressverbindung zwischen dem ersten Ringelement und der Welle ein axiales Verschieben des Elements über das erste Ringelement hinaus verhindert wird. Ferner kann das Element mit einem Befestigungsbereich zwischen der ersten inneren Fläche und einer Wellenoberfläche der Welle angeordnet sein, so dass bei Bestehen der Pressverbindung der Befestigungsbereich zwischen dem ersten Ringelement und der Welle eingespannt ist. Damit wird ebenfalls eine Fixierung des Elements auf der Welle erzielt.

Mit der oben beschriebenen Schrumpfscheibenverbindung wird das Element in einfacher Art und Weise auf der drehbaren Welle der Strömungsmaschine lösbar fixiert. Aufgrund der einfachen Lösbarkeit der Schrumpfscheibenverbindung durch Reduzieren bzw. Aufheben der axialen Spannkraft und Lösen des zweiten Ringelements von dem ersten Ringelement kann schnell das Element von der Welle gelöst werden, so dass nur schwer erreichbare Bauteile der Strömungsmaschine, welche durch das Element verdeckt werden, zugänglich sind. Ein kompliziertes Demontieren der gesamten Welle ist nicht notwendig. Ferner müssen die von dem Element verdeckten Bauteile nicht mehrteilig ausgebildet sein, um z.B. auch ohne Demontage des Elements lösbar zu sein.

Insbesondere ist das Element gemäß einer weiteren beispielhaften Ausführungsform eine Lagerscheibe. Die Lagerscheibe kann beispielsweise zwischen zwei Kugellagern, welche an einem Gehäuse der Strömungsmaschine befestigt sind, gelagert werden. Mittels der Lagerscheibe sind beispielsweise eine axiale und eine radiale Lagerung der Welle möglich.

Gemäß einer weiteren beispielhaften Ausführungsform weist die Strömungsmaschine eine Magnetlagerung auf. Insbesondere weist die Strömungsmaschine hierbei einen ersten Statorring zum Erzeugen einer elektromagnetischen Lagerkraft auf. Der erste Statorring weist eine erste Öffnung auf, welche größer als die Welle ist, so dass die Welle kontaktfrei zu dem ersten Statorring angeordnet ist. Der erste Statorring ist derart angeordnet, dass mittels der elektromagnetischen Lagerkraft ein konstanter axialer Abstand oder ein konstanter radialer Abstand zu der Lagerscheibe haltbar ist. Der Statorring ist beispielsweise an dem Gehäuse der Strömungsmaschine befestigt. Mittels der elektromagnetischen Lagerkraft des Statorrings wird ein vorbestimmter Abstand zwischen dem Statorring und der Lagerscheibe konstant gehalten, wobei dennoch die Lagerscheibe mit der Welle rotierbar gegenüber dem ersten Statorring ist.

Gemäß einer weiteren beispielhaften Ausführungsform weist die Strömungsmaschine einen zweiten Statorring zum Erzeugen einer weiteren elektromagnetischen Lagerkraft auf. Der zweite Statorring weist eine zweite Öffnung auf, welche größer als die Welle ist, so dass die Welle kontaktfrei zu dem zweiten Statorring angeordnet ist. Der zweite Statorring ist derart angeordnet, dass die Lagerscheibe zwischen dem ersten Statorring und dem zweiten Statorring liegt und dass ein weiterer konstanter axialer Abstand oder ein weiterer konstanter radialer Abstand zwischen dem zweiten Statorring und der Lagerscheibe mittels der weiteren elektromagnetischen Lagerkraft haltbar ist.

Der erste Statorring und der zweite Statorring weisen jeweils Spulen auf, welche in Umfangsrichtung der Welle angeordnet sind. Somit kann der erste Statorring und/oder der zweite Statorring eine konstante elektromagnetische Kraft über den gesamten Umfang um die Welle erzeugen und somit einen radialen oder axialen Abstand zwischen dem jeweiligen Statorring und der Lagerscheibe konstant halten. Somit wird eine berührungslose Lagerung der Lagerscheibe und somit der Welle ermöglicht.

Da oftmals derjenige Statorring, welcher axial weiter innerhalb in der Strömungsmaschine angeordnet ist, durch die Lagerscheibe in Axialrichtung versperrt wird, ist es mit üblichen Befestigungsmethoden der Lagerscheibe auf der Welle nur schwer, diesen versperrten Statorring auszubauen. Oftmals muss die gesamte Welle ausgebaut werden oder der Statorring zweiteilig, das heißt mit einer Teilung, ausgeführt werden. Eine solche Teilung der Statorringe stört allerdings das elektromagnetische Feld, so dass die elektromagnetische Lagerkraft gestört wird. Mittels der vorliegenden einfacheren Befestigung des Elements bzw. der Lagerscheibe mittels der Schrumpfscheibenverbindung, welche durch das erste und zweite Ringelement ausgebildet wird, kann in einfacher Art und Weise das erste und zweite Ringelement gelöst werden und somit ebenfalls die Lagerscheibe einfach entfernt werden, so dass der versperrte Statorring zugänglich ist.

Gemäß einer weiteren beispielhaften Ausführungsform liegt das erste Ringelement mit der ersten inneren Fläche an einer Oberfläche der Welle (unmittelbar) an. Die Pressverbindung erfolgt somit ausschließlich zwischen dem ersten Ringelement und der Welle. Somit wird keine Presskraft auf das Element selbst ausgeübt. Liegt das Element an dem ersten Ringelement an, so kann mittels des oben beschriebenen Ausführungsbeispiels ein Verrutschen des Elements in Axialrichtung verhindert werden und somit eine Fixierung des Elements auf der Welle umgesetzt werden.

Gemäß einer weiteren beispielhaften Ausführungsform weist das Element einen Befestigungsabschnitt auf. Der Befestigungsabschnitt ist zwischen der ersten inneren Fläche des ersten Ringelements und der Welle angeordnet, so dass mittels Verschiebens des zweiten Ringelements relativ zu dem ersten Ringelement das erste Ringelement eine radiale Spannkraft erfährt und damit eine Pressverbindung zwischen dem ersten Ringelement, dem Befestigungsabschnitt und der Welle erzeugt wird.

Der Befestigungsabschnitt bildet beispielsweise einen flanschförmigen Fortsatz in axialer Richtung des Elements aus. Der Befestigungsabschnitt kann somit beispielsweise röhrenförmig ausgebildet sein, wobei der Innendurchmesser des Befestigungsabschnitts dem Außendurchmesser der Welle an der vorbestimmten Position entsprechen kann. Der Befestigungsabschnitt weist ferner eine radial äußere Fläche auf, auf welcher die erste innere Fläche des ersten Ringelements aufliegt. Unter Ausübung der radialen Spannkraft auf das zweite Ringelement verringert sich dessen Durchmesser, so dass ebenfalls die radiale Spannkraft auf den Befestigungsabschnitt übertragen wird. Der Befestigungsabschnitt ist derart eingerichtet, dass bei Ausüben der radialen Spannkraft ebenfalls sein Innendurchmesser reduziert wird, so dass die Pressverbindung mit der Welle erzeugbar ist. Der Befestigungsabschnitt ist derart ausgebildet, dass bei Ausübung der radialen Spannkraft dieser verformbar (insbesondere elastisch verformbar) ist, so dass die Pressverbindung erzeugbar ist. Der Befestigungsabschnitt kann ferner einen Spalt in Umfangsrichtung aufweisen, um eine bessere Verformbarkeit des Befestigungsabschnitts zu erzeugen.

Erfindungsgemäß weist die Strömungsmaschine ferner ein (lösbares) Spannelement zum axialen Verschieben des zweiten Ringelements relativ zu dem ersten Ringelement. Das Spannelement kann derart angeordnet sein, dass entgegen der ersten Richtung eine axiale Spannkraft zum Spannen des zweiten Ringelements auf das erste Ringelement einstellbar ist, um eine lösbare Pressverbindung zwischen dem ersten Ringelement und der Welle zu erzeugen.

Das Spannelement kann beispielsweise eine lösbare Spannbacke oder eine lösbare Schraube aufweisen. Beispielsweise kann eine Schraubverbindung zwischen dem zweiten Ringelement und dem Element geschaffen werden. Wird die Schraube angezogen, so schiebt sich das zweite Ringelement in Richtung des Elements insbesondere entgegen der ersten Richtung, so dass das zweite Element auf das erste Ringelement gespannt wird und dadurch die radiale Spannkraft erzeugt wird. Mittels der Schraube kann die Größe der radialen Spannkraft über das Drehmoment der Schraube eingestellt werden. Ferner ermöglicht eine Schraubverbindung ein einfaches Lösen der Pressverbindung.

Gemäß einer weiteren beispielhaften Ausführungsform weist die Strömungsmaschine ferner ein weiteres erstes Ringelement und ein weiteres zweites Ringelement auf. Das weitere erste Ringelement ist mit einer weiteren ersten in Radialrichtung inneren Fläche und einer weiteren ersten in Radialrichtung äußeren Fläche ausgebildet. Das weitere zweite Ringelement ist mit einer weiteren zweiten in Radialrichtung inneren Fläche ausgebildet. Das weitere erste Ringelement ist mit der weiteren ersten inneren Fläche auf der Welle angeordnet und das Element mittels des weiteren ersten Ringelements an einer vorbestimmten Position auf der Welle fixiert. Das weitere zweite Ringelement ist mit der zweiten inneren Fläche anliegend auf der weiteren ersten äußeren Fläche des weiteren ersten Ringelements angeordnet.

Das Element ist zwischen dem ersten Ringelement und dem zweiten Ringelement einerseits und dem weiteren ersten Ringelement und dem zweiten Ringelement andererseits auf der Welle angeordnet.

Die weitere erste äußere Fläche läuft von einem ersten axialen Ende der weiteren ersten äußeren Fläche zu einem zweiten axial gegenüberliegenden axialen Ende der weiteren ersten äußeren Fläche konisch zu und die weitere zweite innere Fläche läuft komplementär zu der weiteren ersten äußeren Fläche konisch zu, dass mittels Verschiebens des weiteren zweiten Ringelements relativ zu dem weiteren ersten Ringelement das weitere erste Ringelement eine weitere radiale Spannkraft erfährt, so dass eine Pressverbindung zwischen dem weiteren ersten Ringelement und der Welle erzeugbar ist.

Das weitere erste Ringelement und das weitere zweite Ringelement können dieselben Merkmale und denselben Aufbau wie das erste Ringelement und das zweite Ringelement aufweisen. Insbesondere sind die konisch verlaufenden Flächen der ersten und zweiten Ringelemente entgegengesetzt zu den konischen Verläufen der Flächen der weiteren ersten Ringelemente und weiteren zweiten Ringelemente. Das erste Ringelement liegt an einem ersten axialen Ende des Elements an und das weitere erste Ringelement liegt an einem gegenüberliegenden Ende des Elements an, so dass eine axiale Verschiebung des Elements aufgrund der beiden ersten Ringelemente unterbunden wird.

Mit der vorliegenden Erfindung wird eine Strömungsmaschine geschaffen, bei welcher die (Axial-) Lagerscheibe von magnetisch gelagerten (zum Beispiel Turbomaschinen-) Wellen mittels der oben beschriebenen Schrumpfscheibenverbindung, bestehend aus dem ersten Ringelement und dem zweiten Ringelement, auf der Welle befestigt wird, um eine einfache Montage- und Demontagemöglichkeit der Lagerscheibe zu erzielen.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Kurze Beschreibung der Zeichnung

Im Folgenden werden zur weiteren Erläuterung und zum besseren Verständnis der vorliegenden Erfindung Ausführungsbeispiele unter Bezugnahme auf die beigefügte Figur näher beschrieben.

Die Figur zeigt eine schematische Darstellung eines Teils einer Strömungsmaschine, bei welcher ein Element mittels einer Schrumpfscheibenverbindung auf der Welle, gemäß einer beispielhaften Ausführungsform der vorliegenden Erfindung, fixiert ist.

### Detaillierte Beschreibung von exemplarischen Ausführungsformen

Gleiche oder ähnliche Komponenten sind in der Figur mit gleichen Bezugsziffern versehen. Die Darstellung in der Figur ist schematisch und nicht maßstäblich.

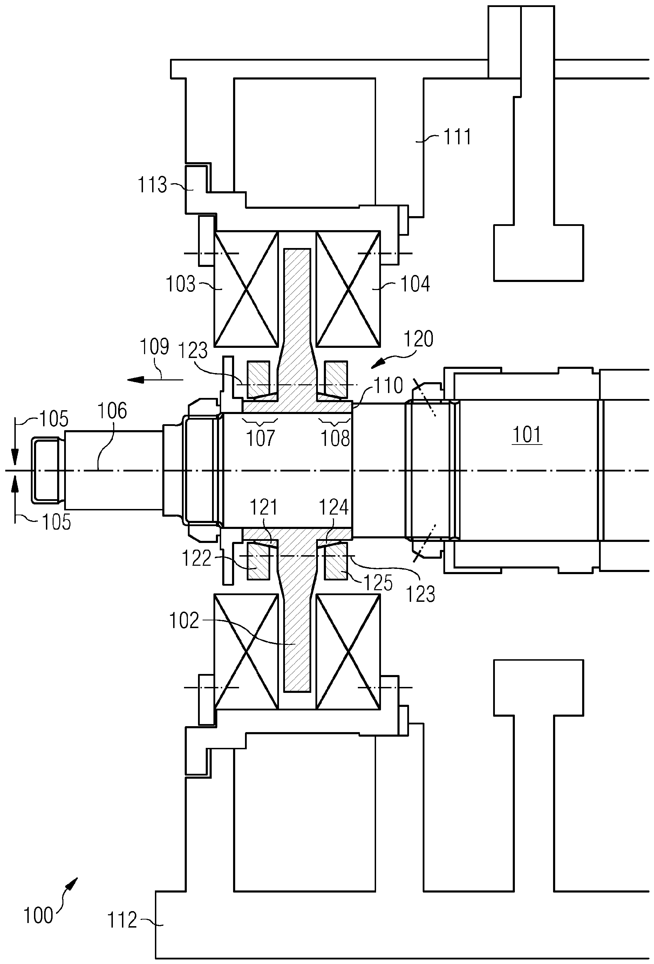

Die **Figur** zeigt eine Strömungsmaschine 100, welche ein Gehäuse bzw. ein Lagergehäuse 113, insbesondere ein Axiallagergehäuse, und eine darin drehbar um eine Drehachse 106 gelagerten Welle 101 aufweist. Ferner weist die Strömungsmaschine 100 ein Element 102 mit einer Durchgangsöffnung auf, wobei die Welle 101 durch die Durchgangsöffnung hindurchragt und das Element 102 an einer vorbestimmten Position auf der Welle 101 angeordnet ist. In Fig. 1 ist das Element 102 beispielsweise eine Lagerscheibe.

Ferner weist die Strömungsmaschine 100 ein erstes Ringelement 121 und ein zweites Ringelement 122 auf. Das erste Ringelement 121 ist mit einer ersten in Radialrichtung 105 inneren Fläche und einer ersten in Radialrichtung 105 äußeren Fläche ausgebildet. Das zweite Ringelement 122 ist mit einer zweiten in Radialrichtung 105 inneren Fläche ausgebildet. Das erste Ringelement 121 ist mit der ersten inneren Fläche auf der Welle 101 befestigt. Das erste Ringelement 121 ist derart ausgebildet, dass das Element 102 mittels des ersten Ringelements 121 in einer vorbestimmten Position auf der Welle 101 fixierbar ist. In Fig. 1 ist das erste Ringelement 121 derart ausgebildet, dass das Element 102 beispielsweise keine axiale und radiale Bewegung gegenüber dem ersten Ringelement 121 ausüben kann.

Das zweite Ringelement 122 ist mit der zweiten inneren Fläche anliegend auf der ersten äußeren Fläche des ersten Ringelements 121 angeordnet. Die erste äußere Fläche läuft entlang einer ersten Richtung 109, welche parallel zu der Drehachse 106 verläuft, konisch zu und die zweite innere Fläche verläuft entlang der ersten Richtung 109 und komplementär zu der ersten äußeren Fläche konisch derart zu, dass mittels Verschiebens bzw. Spannens des zweiten Ringelements 122 entgegen der ersten Richtung 109 auf das Ringelement 121 das erste Ringelement 121 eine radiale Spannkraft erfährt.

Aufgrund der radialen Spannkraft verkleinert sich der innere Durchmesser des ersten Ringelements 121, so dass eine Pressverbindung zwischen dem ersten Ringelement 121 und der Welle 101 erzeugbar ist.

In der Figur ist das Element 102, das erste Ringelement 121, das zweite Ringelement 122 und das Element 102 in einer Schnittebene dargestellt (siehe schraffierte Bereiche). In der Schnittebene werden die konischen Verläufe der ersten äußeren Fläche und der zweiten inneren Fläche dargestellt. Wie in der Figur ersichtlich, weist die erste äußere Fläche und die zweite innere Fläche aufgrund ihrer komplementär konisch zulaufenden Ausbildung eine Keilform in der Querschnittsebene auf. Die zweite innere Fläche verläuft dabei derart komplementär zu der ersten äußeren Fläche konisch zu, dass eine Berührfläche zwischen der zweiten inneren Fläche und der ersten äußeren Fläche vorliegt.

Eine Linie, welche innerhalb der Querschnittsebene verläuft und welche auf der ersten äußeren Fläche und auf der zweiten inneren Fläche verläuft, weist einen Winkel zu der Drehachse auf und ist daher nicht parallel zur Drehachse.

Wird nun das zweite Ringelement 122 entgegen der ersten Richtung 109 in axialer Richtung verschoben, so erzeugt dieses Aufschieben aufgrund der konischen Berührflächen des ersten und des zweiten Ringelements 121, 122 eine radiale Spannkraft, welche zumindest eine Komponente in Radialrichtung 105 aufweist. Somit wird die Pressverbindung zwischen dem ersten Ringelement 121 und der Welle 101 erzeugt.

Ein Verschieben des Elements 102 über das erste Ringelement 121 wird verhindert, da das erste Ringelement 121 (mit seinem äußeren Durchmesser) größer ausgebildet ist als ein innerer Durchmesser des Elements 102. Auf dem in Axialrichtung und entgegen der ersten Richtung 109 gegenüberliegenden axialen Ende des Elements 102 kann das Element in Kontakt mit einem Wellenabsatz 110 sein. Damit ist ein weiteres Verschieben des Elements 102 entgegen der ersten Richtung 109 unterbunden.

Zusätzlich oder alternativ zu dem Wellenabsatz 110 kann ein weiteres erstes Ringelement 124 und ein weiteres zweites Ringelement 125 angeordnet sein, um ein Verschieben des Elements 102 entgegen der ersten Richtung 109 zu verhindern. Das weitere erste Ringelement 124 und das weitere zweite Ringelement 125 können entsprechend die Merkmale und die Ausbildungen des ersten Ringelements 121 und des zweiten Ringelements 122 aufweisen. Zur besseren Montage kann dabei die weitere erste äußere Fläche des weiteren ersten Ringelements 124 und die weitere zweite innere Fläche des weiteren zweiten Ringelements 125 entgegengesetzt zu dem ersten Ringelement 122 und dem zweiten Ringelement 122 konisch zulaufen. Somit muss zum Spannen des weiteren zweiten Ringelements 125 dieses entlang der ersten Richtung 109 auf das weitere erste Ringelement 124 aufgeschoben werden, damit das weitere erste Ringelement 124 eine weitere radiale Spannkraft erfährt.

Wie in der Figur dargestellt, kann das Element 102 einen Befestigungsabschnitt 107 und einen weiteren Befestigungsabschnitt 108 aufweisen. Die Befestigungsabschnitte 107, 108 sind jeweils zwischen der Welle 101 und dem jeweiligen ersten Ringelement 121, 124 angeordnet. Die Befestigungsabschnitte 107, 108 weisen einen in Axialrichtung röhrenförmig gebildeten Fortsatz des Elements 102 auf. Mittels Ausübens der jeweiligen radialen Spannkraft auf das jeweilige erste Ringelement 121, 124 wird eine Pressverbindung zwischen dem jeweiligen ersten Ringelement 121, den jeweiligen Befestigungsabschnitten 107, 108 und der Welle 101 erzeugt.

Erfindungsgemäss weist die Strömungsmaschine 100 ein oder mehrere lösbare Spannelemente 123 auf. Das lösbare Spannelement 123 ist eine Schraube. Das zweite Ringelement 122 und das Element 101 weisen jeweils eine Bohrung in Axialrichtung auf. Die Schraube als lösbares Spannelement 123 kann zwischen dem zweiten Ringelement 122 und dem Element 102 derart verschraubt werden, dass mittels Einschraubens der Schraube eine axiale Spannkraft erzeugt wird, so dass das zweite Ringelement 122 entgegen der ersten Richtung 109 auf das erste Ringelement 121 aufgeschoben wird, so dass die radiale Spannkraft erzeugt wird.

In einer weiteren beispielhaften Ausführungsform kann ferner das weitere zweite Ringelement 125 eine Bohrung (insbesondere eine Gewindebohrung) aufweisen, wobei die Bohrungen in dem zweiten Ringelement 122, dem Element 102 und dem weiteren zweiten Ringelement 125 koaxial ausgebildet sind. Somit kann eine Schraube als Spannelement 123 das zweite Ringelement 122, das Element 101 und das weitere zweite Ringelement 125 verbinden und auf das zweite Ringelement 122 und das weitere zweite Ringelement 125 mittels Schraubens eine axiale Spannkraft ausüben. Die Schraube zieht das zweite Ringelement 122 und das weitere zweite Ringelement 125 axial zusammen, so dass dadurch gleichzeitig die radiale Spannkraft des ersten Ringelements 121 und die weitere radiale Spannkraft des weiteren ersten Ringelements 124 erzeugt wird. Somit kann in einfacher Art und Weise schnell die Pressverbindung hergestellt werden. Durch Lösen der Schraube kann in einfacher Art und Weise die erzeugte Pressverbindung gelöst werden, so dass zügig eine Demontage des Elements 102 ermöglicht wird.

Ferner zeigt die Figur einen ersten Statorring 103 und einen zweiten Statorring 104. Zwischen den beiden Statorringen 103, 104 ist das Element 102, welches in Fig. 1 als Lagerscheibe ausgebildet ist, drehbar und beabstandet zu den jeweiligen Statorringen 103, 104 angeordnet. Die Statorringe 103, 104 erzeugen ein elektromagnetisches Feld, welche den axialen Abstand des Elements 102 zu dem jeweiligen Statorring 103, 104 konstant halten, so dass eine kontaktlose Lagerung ermöglicht wird.

Die Statorringe 103, 104 können an dem Lagergehäuse 113 befestigt, welches mit einem Lagergehäuse-Oberteil 111 und einem Lagergehäuse-Unterteil 112 an der Turbine ausgebildet ist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Strömungsmaschine (100) aufweisend
ein Gehäuse (111, 112, 113),
eine relativ zu dem Gehäuse um eine Drehachse (106) drehbar gelagerte Welle (101), wobei eine Radialrichtung (105) senkrecht zur Drehachse (106) verläuft,
ein Element (102) mit einer Durchgangsöffnung,
wobei die Welle (101) durch die Durchgangsöffnung hindurchragt und das Element (102) an einer vorbestimmten Position an der Welle (101) angeordnet ist,
ein erstes Ringelement (121),
ein zweites Ringelement (122),
wobei das erste Ringelement (121) mit einer ersten in Radialrichtung (105) inneren Fläche und einer ersten in Radialrichtung (105) äußeren Fläche ausgebildet ist,
wobei das zweite Ringelement (122) mit einer zweiten in Radialrichtung (105) inneren Fläche ausgebildet ist,
wobei das erste Ringelement (121) mit der ersten inneren Fläche an der Welle (101) angeordnet ist und das Element (102) mittels des ersten Ringelements (121) an der vorbestimmten Position an der Welle (101) fixiert ist,
wobei das zweite Ringelement (122) mit der zweiten inneren Fläche anliegend auf der ersten äußeren Fläche des ersten Ringelements (121) angeordnet ist, und
wobei die erste äußere Fläche von einem ersten axialen Ende der ersten äußeren Fläche zu einem zweiten axial gegenüberliegenden axialen Ende der ersten äußeren Fläche konisch zuläuft und die zweite innere Fläche komplementär zu der ersten äußeren Fläche konisch zuläuft, sodass mittels eines axialen Verschiebens des zweiten Ringelements (122) relativ zu dem ersten Ringelement (121) das erste Ringelement (121) eine radiale Spannkraft erfährt und damit eine Pressverbindung zwischen dem erste Ringelement (121) und der Welle (101) erzeugt wird,
ein lösbares Spannelement (123) zum axialen Verschieben des zweiten Ringelements (122) relativ zu dem ersten Ringelement (121),
wobei das lösbare Spannelement (123) zum axialen Verschieben des zweiten Ringelements (123) relativ zu dem ersten Ringelement (121) eine Schraube ist, die zwischen dem zweiten Ringelement (122) und dem Element (102) derart verschraubbar ist, dass mittels Einschraubens der Schraube eine axiale Spannkraft erzeugbar ist, so dass das zweite Ringelement (122) entgegen der ersten Richtung (109) auf das erste Ringelement (121) aufgeschoben wird und die radiale Spannkraft erzeugbar ist.

2. Strömungsmaschine (100) nach Anspruch 1,
wobei das Element (102) eine Lagerscheibe ist.

3. Strömungsmaschine (100) nach Anspruch 2, ferner aufweisend
einen ersten Statorring (103) zum Erzeugen einer elektromagnetischen Lagerkraft,
wobei der erste Statorring (103) eine erste Öffnung aufweist, welche größer als die Welle (101) ist, sodass die Welle (101) kontaktfrei zu dem ersten Statorring (103) angeordnet ist, und
wobei der erste Statorring (103) derart angeordnet ist, dass mittels der elektromagnetischen Lagerkraft ein konstanter axialer Abstand oder ein konstanter radialer Abstand zu der Lagerscheibe haltbar ist.

4. Strömungsmaschine (100) nach Anspruch 3, ferner aufweisend
einen zweiten Statorring (104), zum Erzeugen einer weiteren elektromagnetischen Lagerkraft,
wobei der zweite Statorring (104) eine zweite Öffnung aufweist, welche größer als die Welle (101) ist, sodass die Welle (101) kontaktfrei zu dem zweiten Statorring (104) angeordnet ist, und
wobei der zweite Statorring (104) derart angeordnet ist, dass sich die Lagerscheibe zwischen dem ersten Statorring (103) und dem zweiten Statorring (104) befindet und dass ein weiterer konstanter axialer Abstand oder ein weiterer konstanter radialer Abstand zwischen dem zweiten Statorring (104) und der Lagerscheibe mittels der weiteren elektromagnetischen Lagerkraft haltbar ist.

5. Strömungsmaschine (100) nach einem der Ansprüche 1 bis 4,
wobei das erste Ringelement (121) mit der ersten inneren Fläche an einer Oberfläche der Welle (1C1) anliegt.

6. Strömungsmaschine (100) nach einem der Ansprüche 1 bis 4,
wobei das Element (102) einen Befestigungsabschnitt (107) aufweist, und
wobei der Befestigungsabschnitt (107) zwischen der ersten inneren Fläche des ersten Ringelements (121) und der Welle (101) angeordnet ist, so dass mittels Verschiebens des zweiten Ringelements (122) relativ zum ersten Ringelement (121) das erste Ringelement (121) die radiale Spannkraft erfährt und damit die Pressverbindung zwischen dem erste Ringelement (121), dem Befestigungsabschnitt (107) und der Welle (101) erzeugt wird.

7. Strömungsmaschine (100) nach einem der Ansprüche 1 bis 6, ferner aufweisend
ein weiteres erstes Ringelement (124), und
ein weiteres zweites Ringelement (125),
wobei das weitere erste Ringelement (124) mit einer weiteren ersten in Radialrichtung (105) inneren Fläche und einer weiteren ersten in Radialrichtung (105) äußeren Fläche ausgebildet ist,
wobei das weitere zweite Ringelement (125) mit einer weiteren zweiten in Radialrichtung (105) inneren Fläche ausgebildet ist,
wobei das weitere erste Ringelement (124) mit der weiteren ersten inneren Fläche auf der Welle (101) angeordnet ist und das Element (102) mittels des weiteren ersten Ringelements (124) an der vorbestimmten Position an der Welle (101) fixiert ist,
wobei das weitere zweite Ringelement (125) mit der weiteren zweiten inneren Fläche anliegend an der weiteren ersten äußeren Fläche des Weiteren ersten Ringelements (124) angeordnet ist,
wobei das Element (102) zwischen
a) dem ersten Ringelement (121) und dem zweiten Ringelement (122) einerseits und
b) dem weiteren ersten Ringelement (124) und dem zweiten Ringelement (125) andererseits auf der Welle (101) angeordnet ist, und
wobei die weitere erste äußere Fläche von einem weiteren ersten axialen Ende der ersten äußere Fläche zu einem weiteren zweiten axial gegenüberliegenden axialen Ende der ersten äußere Fläche konisch zuläuft und die weitere zweite innere Fläche komplementär zu der weiteren ersten äußeren Fläche konisch derart zuläuft, dass mittels Verschiebens des weiteren zweiten Ringelements (125) relativ zu dem weiteren ersten Ringelement (124) das weitere erste Ringelement (124) eine weitere radiale Spannkraft erfährt und damit eine weitere Pressverbindung zwischen dem weiteren ersten Ringelement (124) und der Welle (101) erzeugt wird.

8. Verfahren zum Erzeugen einer Pressverbindung zwischen einem ersten Ringelement (121) und einer Welle (101) einer Strömungsmaschine (100), das Verfahren aufweisend drehbares Lagern der Welle (101) relativ zu dem Gehäuse um eine Drehachse (106),
wobei eine Radialrichtung (105) senkrecht zur Drehachse (106) verläuft,
Hindurchführen der Welle (101) durch eine Durchgangsöffnung eines Elements (102),
Anordnen des Elements (102) an einer vorbestimmten Position auf der Welle (101),
Anordnen des ersten Ringelements (121) mit einer ersten inneren Fläche des ersten Ringelements (121) auf der Welle (101), wobei das erste Ringelement (121) das Element (102) mittels des ersten Ringelements (121) an der vorbestimmten Position auf der Welle (101) fixiert,
Anordnen einer zweiten in Radialrichtung (105) inneren Fläche eines zweiten Ringelements (122) anliegend auf einer ersten in Radialrichtung (105) äußeren Fläche des ersten Ringelements (121),
wobei die erste äußere Fläche von einem ersten axialen Ende der ersten äußeren Fläche zu einem zweiten axial gegenüberliegenden axialen Ende der ersten äußeren Fläche konisch zuläuft und die zweite innere Fläche komplementär zu der ersten äußeren Fläche konisch zuläuft,
Verschieben des zweiten Ringelements (122) relativ zu dem ersten Ringelement (121),
wobei mittels des Verschiebens des zweiten Ringelements (122) relativ zu dem ersten Ringelement (121) das erste Ringelement (121) eine radiale Spannkraft erfährt und damit die Pressverbindung zwischen dem erste Ringelement (121) und der Welle (101) erzeugt wird, und
axiales Verschieben des zweiten Ringelements (122) relativ zu dem ersten Ringelement (121) mittels eines lösbaren Spannelements (123), wobei eine Schraube als lösbares Spannelement (123) zwischen dem zweiten Ringelement (122) und dem ersten Element (102) derart verschraubbar ist, dass mittels Einschraubens der Schraube eine axiale Spannkraft erzeugbar ist, so dass das zweite Ringelement (122) entgegen der ersten Richtung (109) auf das erste Ringelement (121) aufgeschoben wird und die radiale Spannkraft erzeugbar ist.

## Claims

1. Turbomachine (100) having
a housing (111,112,113),
a shaft (101) mounted rotatably relative to the housing about a rotary axis (106), wherein a radial direction (105) extends perpendicular to the rotary axis (106),
an element (102) with a through-opening,
wherein the shaft (101) protrudes through the through-opening and the element (102) is arranged at a predetermined position on the shaft (101),
a first ring element (121),
a second ring element (122),
wherein the first ring element (121) is embodied with a first inner surface in the radial direction (105) and a first outer surface in the radial direction (105),
wherein the second ring element (122) is embodied with a second inner surface in the radial direction (105),
wherein the first ring element (121) is arranged with the first inner surface on the shaft (101) and the element (102) is fixed by means of the first ring element (121) at the predetermined position on the shaft (101),
wherein the second ring element (122) is arranged with the second inner surface lying on the first outer surface of the first ring element (121) and
wherein the first outer surface runs conically from a first axial end of the first outer surface to a second axially opposite axial end of the first outer surface and the second inner surface tapers conically in a complementary way to the first outer surface so that, by means of an axial displacement of the second ring element (122) relative to the first ring element (121), the first ring element (121) is exposed to a radial tension force and hence a compression connection is established between the first ring element (121) and the shaft (101),
a detachable tensioning element (123) for the axial displacement of the second ring element (122) relative to the first ring element (121),
wherein the detachable tensioning element (123) for the axial displacement of the second ring element (123) relative to the first ring element (121) is a screw, which can be screwed between the second ring element (122) and the element (102) in such a way that, by means of the screwing-in of the screw, it is possible to create an axial tension force so that the second ring element (122) is pushed against the first direction (109) onto the first ring element (121) and it is possible to create the radial tension force.

2. Turbomachine (100) according to claim 1,
wherein the element (102) is a bearing disk.

3. Turbomachine (100) according to claim 2 further having a first stator ring (103) to generate an electromagnetic bearing force,
wherein the first stator ring (103) has a first opening, which is larger than the shaft (101) so that the shaft (101) is arranged contactlessly with respect to the first stator ring (103) and
wherein the first stator ring (103) is arranged in such a way that the electromagnetic bearing force enables a constant axial distance or a constant radial distance to the bearing disk to be maintained.

4. Turbomachine (100) according to claim 3, further having a second stator ring (104), to generate a further electromagnetic bearing force,
wherein the second stator ring (104) has a second opening, which is larger than the shaft (101) so that the shaft (101) is arranged contactlessly with respect to the second stator ring (104) and
wherein the second stator ring (104) is arranged in such a way that the bearing disk is disposed between the first stator ring (103) and the second stator ring (104) and a further constant axial distance or a further constant radial distance can be maintained between the second stator ring (104) and the bearing disk by means of the further electromagnetic bearing force.

5. Turbomachine (100) according to one of claims 1 to 4,
wherein the first ring element (121) is arranged with the first inner surface lying on a surface of the shaft (101).

6. Turbomachine (100) according to one of claims 1 to 4,
wherein the element (102) has a fastening section (107) and
wherein the fastening section (107) is arranged between the first inner surface of the first ring element (121) and the shaft (101) so that, by means of the displacement of the second ring element (122) relative to the first ring element (121), the first ring element (121) is exposed to the radial tension force and hence the compression connection between the first ring element (121), the fastening section (107) and the shaft (101) is established.

7. Turbomachine (100) according to one of claims 1 to 6, further having
a further first ring element (124), and
a further second ring element (125),
wherein the further first ring element (124) is embodied with a further first inner surface in the radial direction (105) and a further first outer surface in the radial direction (105),
wherein the further second ring element (125) is embodied with a further second inner surface in the radial direction (105),
wherein the further first ring element (124) is arranged with the further first inner surface on the shaft (101) and the element (102) is fixed by means of the further first ring element (124) at the predetermined position on the shaft (101),
wherein the further second ring element (125) is arranged with the further second inner surface lying on the further first outer surface of the further first ring element (124),
wherein the element (102) is arranged between
a) the first ring element (121) and the second ring element (122) on one side and
b) the further first ring element (124) and the second ring element (125) on the other side on the shaft (101) and
wherein the further first outer surface tapers conically from a further first axial end of the first outer surface to a further second axially opposite axial end of the first outer surface and the further second inner surface tapers conically in a complementary way to the further first outer surface in such a way that that, by means of the displacement of the further second ring element (125) relative to the further first ring element (124), the further first ring element (124) is exposed to a further radial tension force and hence a further compression connection is established between the further first ring element (124) and the shaft (101).

8. Method for establishing a compression connection between a first ring element (121) and a shaft (101) of a turbomachine (100), the method having
rotatable mounting of the shaft (101) relative to the housing about a rotary axis (106),
wherein a radial direction (105) extends perpendicular to the rotary axis (106),
passing the shaft (101) through a through-opening of an element (102),
arranging the element (102) at a predetermined position on the shaft (101),
arranging the first ring element (121) with a first inner surface of the first ring element (121) on the shaft (101), wherein the first ring element (121) fixes the element (102) by means of the first ring element (121) at the predetermined position on the shaft (101),
arranging a second inner surface of a second ring element (122) in the radial direction (105) lying on a first outer surface of the first ring element (121) in the radial direction (105),
wherein the first outer surface tapers conically from a first axial end of the first outer surface to a second axially opposite axial end of the first outer surface and the second inner surface tapers conically in a complementary way to the first outer surface the displacement of the second ring element (122) relative to the first ring element (121),
wherein, by means of the displacement of the second ring element (122) relative to the first ring element (121),
the first ring element (121) is exposed to a radial tension force and hence the compression connection is established between the first ring element (121) and the shaft (101), and
axial displacement of the second ring element (122) relative to the first ring element (121) by means of a detachable tensioning element (123), wherein a screw, as a detachable tensioning element (123), can be screwed between the second ring element (122) and the element (102) in such a way that, by means of the screwing-in of the screw, it is possible to create an axial tension force so that the second ring element (122) is pushed against the first direction (109) onto the first ring element (121) and it is possible to create the radial tension force.

## Revendications

1. Machine à écoulement (100) comprenant
un logement (111, 112, 113), un arbre (101) monté rotatif sur un pivot (106) par rapport au logement, dans laquelle un sens radial (105) est vertical au pivot (106), un élément (102) avec une ouverture de passage, dans laquelle l'arbre (101) fait saillie à travers l'ouverture de passage et l'élément (102) est disposé sur l'arbre (101) à une position prédéfinie,
un premier élément annulaire (121),
un deuxième élément annulaire (122),
dans laquelle le premier élément annulaire (121) est formé avec une première face intérieure dans le sens radial (105) et une première face extérieure dans le sens radial (105),
dans laquelle le deuxième élément annulaire (122) est formé avec une deuxième face intérieure dans le sens radial (105),
dans laquelle le premier élément annulaire (121) est disposé sur l'arbre (101) par la première face intérieure et l'élément (102) est fixé sur l'arbre (101) à la position prédéfinie au moyen du premier élément annulaire (121), dans laquelle le deuxième élément annulaire (122) repose sur la première face extérieure du premier élément annulaire (121) par la deuxième face intérieure, et dans laquelle la première face extérieure termine de manière conique d'une première extrémité axiale de la première face extérieure vers une deuxième extrémité axiale opposée axialement de la première face extérieure, et la deuxième face intérieure termine de manière conique complémentaire à la première face extérieure, de sorte que par un déplacement axial du deuxième élément annulaire (122) par rapport au premier élément annulaire (121), le premier élément annulaire (121) subit une force de serrage radiale et ainsi une liaison par ajustement serré est produite entre le premier élément annulaire (121) et l'arbre (101),
un élément de serrage (123) amovible pour le déplacement axial du deuxième élément annulaire (122) par rapport au premier élément annulaire (121),
dans laquelle l'élément de serrage (123) amovible pour le déplacement axial du deuxième élément annulaire (122) par rapport au premier élément annulaire (121) est une vis qui peut être vissée de telle façon entre le deuxième élément annulaire (122) et l'élément (102) qu'une force de serrage axiale peut être produite par le vissage de la vis, de sorte que le deuxième élément annulaire (122) est poussé sur le premier élément annulaire (121) inversement à la première direction (109) et la force de serrage radiale peut être produite.

2. Machine à écoulement (100) selon la revendication 1, dans laquelle l'élément (102) est un disque de palier.

3. Machine à écoulement (100) selon la revendication 2 comprenant en outre
une première bague de stator (103) pour produire une force de palier électromagnétique,
dans laquelle la première bague de stator (103) présente une première ouverture qui est plus grande que l'arbre (101), de sorte que l'arbre (101) est disposé sans contact avec la première bague de stator (103), et
dans laquelle la première bague de stator (103) est ainsi disposée qu'une distance axiale constante ou une distance radiale constante au disque de palier peut être maintenue au moyen de la force de palier électromagnétique.

4. Machine à écoulement (100) selon la revendication 3 comprenant en outre
une deuxième bague de stator (104) pour produire une force de palier électromagnétique supplémentaire,
dans laquelle la deuxième bague de stator (104) présente une deuxième ouverture qui est plus grande que l'arbre (101), de sorte que l'arbre (101) est disposé sans contact avec la deuxième bague de stator (104), et
dans laquelle la deuxième bague de stator (104) est ainsi disposée que le disque de palier se trouve entre la première bague de stator (103) et la deuxième bague de stator (104) et qu'une distance axiale constante supplémentaire ou une distance radiale constante supplémentaire entre la deuxième bague de stator (104) et le disque de palier peut être maintenue au moyen de la force de palier électromagnétique supplémentaire.

5. Machine à écoulement (100) selon l'une des revendications 1 à 4, dans laquelle le premier élément annulaire (121) repose sur une surface de l'arbre (101) par la première face intérieure.

6. Machine à écoulement (100) selon l'une des revendications 1 à 4, dans laquelle l'élément (102) comprend un tronçon de fixation (107), et
dans laquelle le tronçon de fixation (107) est disposé entre la première face intérieure du premier élément annulaire (121) et l'arbre (101), de sorte que par déplacement du deuxième élément annulaire (122) par rapport au premier élément annulaire (121), le premier élément annulaire (121) subit la force de serrage radiale et ainsi, la liaison par ajustement serré est produite entre le premier élément annulaire (121), le tronçon de fixation (107) et l'arbre (101).

7. Machine à écoulement (100) selon l'une des revendications 1 à 6, comprenant en outre
un premier élément annulaire supplémentaire (124), et
un deuxième élément annulaire supplémentaire (125),
dans laquelle le premier élément annulaire supplémentaire (124) est formé avec une première face intérieure supplémentaire dans le sens radial (105) et une première face extérieure supplémentaire dans le sens radial (105),
dans laquelle le deuxième élément annulaire supplémentaire (125) est formé avec une deuxième face intérieure supplémentaire dans le sens radial (105),
dans laquelle le premier élément annulaire supplémentaire (124) est disposé sur l'arbre (101) par la première face intérieure supplémentaire et l'élément (102) est fixé sur l'arbre (101) à la position prédéfinie au moyen du premier élément annulaire supplémentaire (124),
dans laquelle le deuxième élément annulaire supplémentaire (125) repose sur la première face extérieure supplémentaire du premier élément annulaire supplémentaire (124) par la deuxième face intérieure supplémentaire,
dans laquelle l'élément (102) est disposé sur l'arbre (101) entre
a) le premier élément annulaire (121) et le deuxième élément annulaire (122) d'une part et
b) le premier élément annulaire supplémentaire (124) et le deuxième élément annulaire (125) d'autre part, et
dans laquelle la première face extérieure supplémentaire termine de manière conique d'une première extrémité axiale supplémentaire de la première face extérieure vers une deuxième extrémité axiale supplémentaire opposée axialement de la première face extérieure, et la deuxième face intérieure supplémentaire termine de manière conique complémentaire à la première face extérieure supplémentaire, que par déplacement du deuxième élément annulaire supplémentaire (125) par rapport au premier élément annulaire supplémentaire (124), le premier élément annulaire supplémentaire (124) subit une force de serrage radiale supplémentaire et ainsi une liaison par ajustement serré supplémentaire est produite entre le premier élément annulaire supplémentaire (124) et l'arbre (101).

8. Procédé pour produire une liaison par ajustement serré entre un premier élément annulaire (121) et un arbre (101) d'une machine d'écoulement (100), le procédé présentant l'appui rotatif de l'arbre (101) sur un pivot (106) par rapport au logement,
dans lequel un sens radial (105) est vertical au pivot (106),
le passage de l'arbre (101) à travers une ouverture de passage d'un élément (102),
l'agencement de l'élément (102) sur l'arbre (101) à une position prédéfinie,
l'agencement du premier élément annulaire (121) sur l'arbre (101) par une première face intérieure du premier élément annulaire (121), dans lequel le premier élément annulaire (121) fixe l'élément (102) à la position prédéfinie sur l'arbre (101) au moyen du premier élément annulaire (121),
l'agencement d'une deuxième face intérieure d'un deuxième élément annulaire (122) dans le sens radial (105) reposant sur une première face extérieure du premier élément annulaire (121) dans le sens radial (105),
dans lequel la première face extérieure termine de manière conique d'une première extrémité axiale de la première face extérieure vers une deuxième extrémité axiale opposée axialement de la première face extérieure, et la deuxième face intérieure termine de manière conique complémentaire à la première face extérieure,
le déplacement du deuxième élément annulaire (122) par rapport au premier élément annulaire (121),
dans lequel par le déplacement axial du deuxième élément annulaire (122) par rapport au premier élément annulaire (121), le premier élément annulaire (121) subit une force de serrage radiale et ainsi la liaison par ajustement serré est produite entre le premier élément annulaire (121) et l'arbre (101), et
le déplacement axial du deuxième élément annulaire (122) par rapport au premier élément annulaire (121) au moyen d'un élément de serrage (123) amovible, dans lequel une vis peut être vissée de telle façon en tant qu'élément de serrage (123) entre le deuxième élément annulaire (122) et le premier élément (102) qu'une force de serrage axiale peut être produite par vissage de la vis, de sorte que le deuxième élément annulaire (122) est poussé sur le premier élément annulaire (121) inversement à la première direction (109) et la force de serrage radiale peut être produite.
